# EUROPEAN PATENT SPECIFICATION

(11) **EP 4 563 338 B1**
(45) Date of publication and mention of the grant of the patent: **28.10.2026**
(21) Application number: 23212805.8
(22) Date of filing: 28.11.2023
(51) Int. Cl.: B29D 99/00

(54) **SYSTEM AND METHOD FOR SHEAR WEB ATTACHMENT IN WIND TURBINE BLADES**
SYSTEM UND VERFAHREN ZUR SCHERSTEGBEFESTIGUNG IN WINDTURBINENSCHAUFELN
SYSTÈME ET PROCÉDÉ DE FIXATION DE BANDE DE CISAILLEMENT DANS DES PALES D'ÉOLIENNE

(43) Date of publication of application: 04.06.2025
(73) Proprietor: LM Wind Power A/S, 6000 Kolding (DK)
(72) Inventor: VAN NIEUWENHOVE, Stefaan, 1703DH Heerhugowaard (NL); NIELSEN, Finn Kjær, 6622 Bække (DK); MOSEGAARD, Ivan Kaab, 6640 Lunderskov (DK); NYTOFT, Thomas, 6640 Lunderskov (DK)
(74) Representative: Bardehle Pagenberg S.L.

(56) References cited:
- EP-A1- 4 079 672
- CN-U- 217 752 852
- LM WIND POWER: "How to build a wind turbine blade", 15 March 2022 (2022-03-15), XP93158805, Retrieved from the Internet <URL:https://www.youtube.com/watch?v=WxIhGxET7N8> [retrieved on 20240503]

## Description

### FIELD

The present disclosure relates to wind turbine blades, and more particularly, to a system for attachment of one or more shear webs during manufacturing of wind turbine blades. The disclosure further concerns a method used in the placement and attachment of one or more shear webs during manufacturing of wind turbine blades.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades are often made of fiber-reinforced polymer and are usually manufactured as shell parts in molds, where the top side and the bottom side of the blade profile (typically the upwind or pressure side and the downwind or suction side, respectively) are manufactured separately by arranging glass fiber mats in each of the two molds and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or more reinforcing profiles (shear webs), extending along the length of the blade, are often attached to the inside of the lower blade half prior to gluing to the upper blade half.

It is known to manufacture wind turbine blades where each of the wind turbine blades are molded and assembled at the same workstation. The wind turbine blade may then be moved to another workstation, typically a finishing workstation, where the wind turbine blade is cut, trimmed, painted and the final fittings are mounted on the wind turbine blade.

However, as the demand for wind turbines is rapidly increasing, it is found increasingly difficult to scale the conventional manufacturing method to accommodate the demand for several reasons: Firstly, the usual manufacturing method requires that all the materials required for manufacturing a wind turbine blade, e.g. resin and fiber reinforcement material, be transported to every workstation, which is logistically demanding. Secondly, every workstation has to be equipped with tools necessary for every single manufacturing step in the process, which results in a significant overhead. Additionally, the usual manufacturing method requires a mold in every single workstation, which is expensive since production and maintenance of molds are time consuming and thus expensive. Furthermore, the conventional manufacturing method occupies a lot of space, and since the workers at each workstation have to perform a variety of manufacturing steps, there is a risk that the quality of the manufactured wind turbine blades may suffer.

So far, wind turbine production still relies on the above-mentioned manufacturing method. EP2403708 proposes an alternative manufacturing method and an alternative manufacturing line involving "moving molds". In this prior art document, a manufacturing line is disclosed, wherein wind turbine blades are formed in a number of mold sets, each of the mold sets comprising at least a first mold comprising a first mold cavity. The manufacturing line further comprises a number of separate workstations, where separate manufacturing steps are carried out. In particular, a sequence of steps in different workstations may be carried out to manufacture each of the blade shell parts. Once manufactured, the two blade shell parts are moved to a separate workstation where they are adhered to each other, e.g. by gluing flanges located at the leading edge and trailing edge of the finished wind turbine blade. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods. CN 217 752 852 U discloses a system comprising a shear web positioning tool configured to hold a shear web, a set of hinge devices, each comprising a bracket and a movable arm, wherein the movable arm is rotatable about a pivot axis of the bracket and wherein the shear web positioning tool is configured to be connected to the movable arm of the hinge devices.

Regardless of whether a conventional manufacturing method, i.e. a method where each wind turbine blade is molded and assembled at the same workstation, or an alternative manufacturing method involving "moving molds" is employed, a manufacturing step comprising bonding of one or more shear webs to the inside of a blade shell part may need to be carried out. Such attachment may comprise lifting and suspending the shear webs for their precise placement and attachment to the inside of the lower blade half prior to gluing to the upper blade half. Shear webs may be used to provide stiffness to the blade. More specifically, shear web may be provided so that the blade can withstand out-or-plane shear loads.

A crane or hoisting equipment may be used to lift the shear webs for placement and attachment to the inside of the lower blade shell part. In particular, the shear webs may be firmly held in a special tool. The shear webs and the tool may be lifted with overhead cranes to position the shear web assembly into the blade half.

The use of cranes or hoisting assemblies in order to lift the shear web parts exhibits a number of difficulties, especially as the industry moves to larger wind turbine blades. Shear webs are slender and flexible parts. In order to firmly hold the shear webs, increasingly complex, heavy an expensive tools are needed. Accordingly, overhead cranes need to be powerful for this operation which results in increased complexity and costs for the lifting equipment.

Furthermore, the handling and precise positioning of the shear webs by means of a crane and hoisting system becomes increasingly difficult as larger parts need to be manipulated. This can result in a lack of reproducibility leading to quality issues or even to damage of the shear webs due to collisions during the manufacturing processes. Furthermore, the use of cranes and/or other overhead hoisting assemblies may involve working under suspended loads, which may also pose a risk for operators in the manufacturing plant.

The present disclosure provides examples of methods and systems for the attachment of shear webs during manufacturing of wind turbine blades that provide improvements over prior art method and systems.

### SUMMARY

In an aspect of the present disclosure, a system for attaching one or more shear webs during wind turbine blade manufacturing is provided. The shear webs are attached to a first wind turbine blade shell, the first blade shell being held in a blade mold. The system comprises a shear web positioning tool configured to hold one or more shear webs. The system further comprises a set of hinge devices, each comprising a static member and a movable member, wherein the movable member is rotatable about a pivot axis of the static member. The shear web positioning tool is configured to be connected to the movable members of the hinge devices.

According to this aspect, a system allowing handling and installation of the shear webs of a wind turbine is provided which does not require expensive cranes or other lifting equipment. Consequently, the use of overhead cranes may be avoided, thus reducing associated costs. Logistics of the manufacturing plant may also be simplified due to less stringent requirements when compared with those arising from the use of heavy lifting equipment. Thus, in some cases, the use of such heavy lifting equipment may become a limiting factor in the size of the blades that can be produced in a building of a certain height.. The system according to this aspect facilitates handling of the shear webs. Indeed, as wind turbine blades become longer, handling of slender shear webs by means of overhead lifting equipment becomes increasingly challenging. By using a dedicated shear web positioning tool according to the disclosure, strict motion control of the shear webs during the process is achieved. Thus, the shear web positioning tool ensures stability of the shear webs in all directions during the movement. A plurality of hinge devices, distributed along the length of the shear webs, may be used to ensure proper fixation to the shear webs and proper control during the manipulation of the same. Furthermore, in some examples of the disclosure, the hinge devices used for shear web attachment may also be employed for other manufacturing steps, thus resulting in further cost savings.

In some examples, the pivot axis may be substantially horizontal i.e. the axis may be substantially parallel to the floor. In other examples, the pivot axis may be arranged substantially parallel to a longitudinal axis of the first blade mold. In some of these cases, the longitudinal axis of the first blade mold may be substantially horizontal.

In another aspect of the disclosure, a method for attaching one or more shear webs on a first wind turbine blade shell with a system according to the previous aspect is provided. The method comprises providing the shear web positioning tool carrying the shear webs. The method comprises providing also the one or more hinge devices and the mold containing the first blade shell. The shear web positioning tool is connected to the movable member of the hinge devices and the movable member of the hinge devices is rotated about a pivot axis so as to bring the shear web positioning tool in proximity of the first blade shell. The method further comprises putting an end of the shear webs into contact with a surface of the first blade shell. Finally, the method comprises releasing the shear webs from the shear web positioning tool

According to this aspect, a method with enhanced controllability is achieved for the bonding of shear webs on the inside of the lower blade half during blade manufacturing. In particular, simplification and automation of the transport and of the alignment of the shear webs into the blade half is facilitated due to the reliable fixation of the shear webs on the web positioning tool and to the repeatable movement of the powered hinge devices. By using hinge devices for the placement of the shear webs, a fully controlled placement of the shear webs is carried out with improved positioning accuracy. Thus, unlike in conventional methods, no hanging or suspended loads are present. Such loads may sway or otherwise compromise the positioning and the integrity of the shear webs and/or other parts of the blade. Reducing work under suspended loads results also in a safer manufacturing method with less risks for the operators and for the integrity of the system.

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations.

Throughout this disclosure, the terms blade half, blade shell or blade shell part may be used to refer to each of the two blade parts (i.e. upwind and downwind parts) that constitute a complete blade. Said blade parts may each be manufactured in a separate mold and they may be subsequently glued or attached, thus producing a closed blade.

### BRIEF DESCRIPTION OF THE DRAWINGS

Figure 1 illustrates a perspective view of an example of a wind turbine;
Figures 2A - 2B illustrate a perspective view of an example of a wind turbine blade and an example of an internal structure of a wind turbine blade;
Figures 3A - 3I illustrate an example of a system for use during blade manufacturing, the system comprising a shear web positioning tool;
Figure 4 is a flowchart of a method for attaching shear webs according to an example;
Figures 5A-5H schematically illustrate an example of a system for use during manufacturing of a wind turbine blade, the system comprising a shear web positioning tool and two sets of hinge devices.

### DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims.

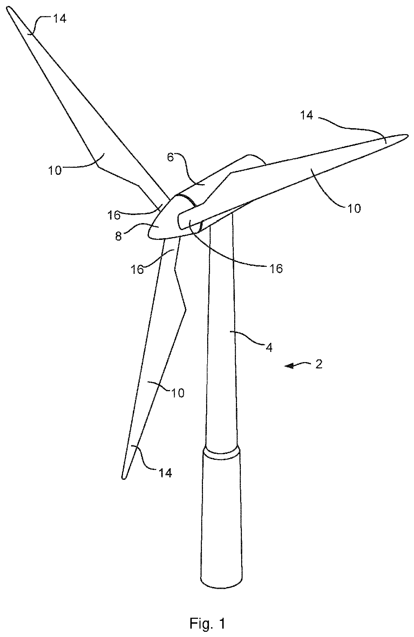

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

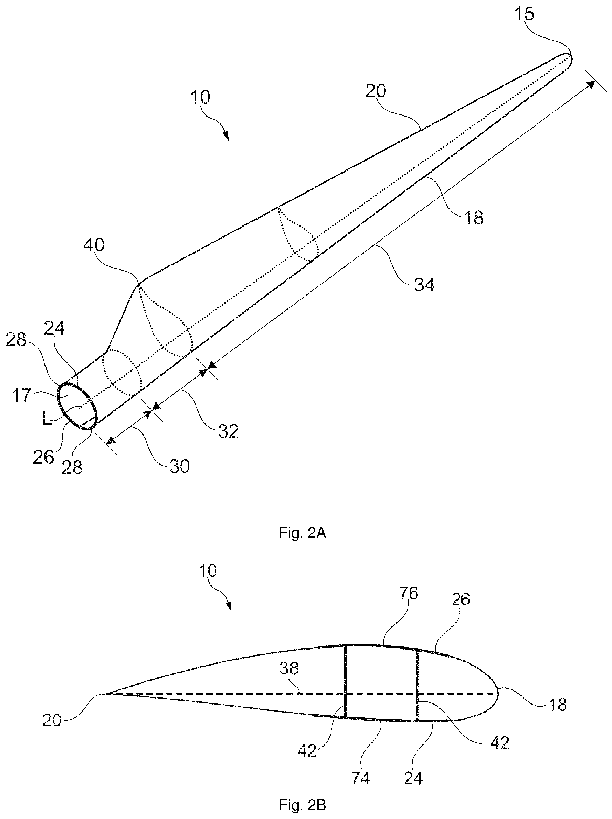

Fig. 2 shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub 8. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub 8. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 comprises a blade shell comprising two blade shell parts (also referred to as half shells or blade halves), a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side shell part 24, a suction side shell part 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

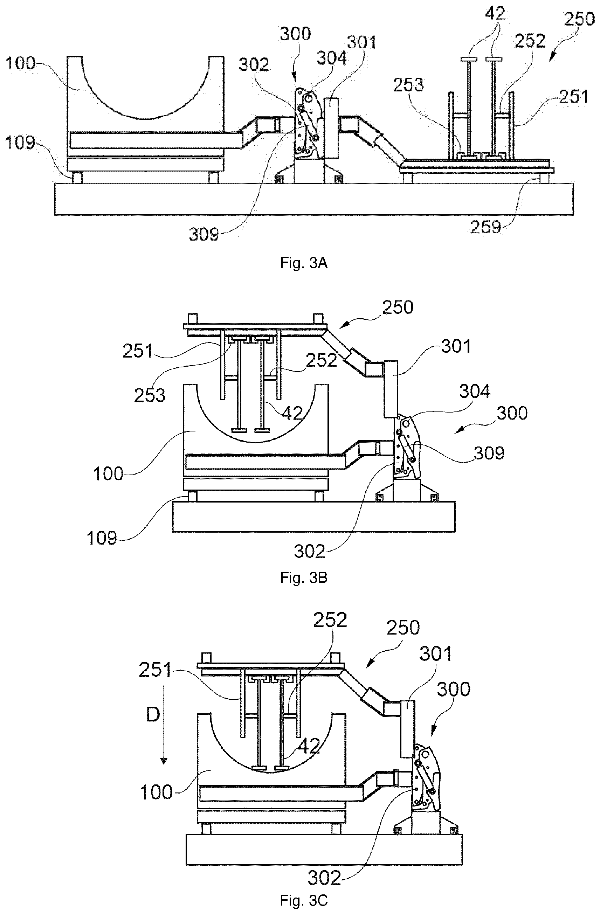

Figures 3A - 3I illustrate an example of a system for attaching a shear web 42 to a first wind turbine blade shell, the first blade shell being held in a blade mold 100. The system comprises a shear web positioning tool 250 configured to hold one or more shear webs 42 and a set of hinge devices 300, each hinge device comprising a static member 302 and a movable member 301. The movable member 301 is rotatable about a pivot axis 304 of the static member 302. The system further comprises that the shear web positioning tool 250 is configured to be connected to the movable members 301 of the hinge devices 300.

In examples of the disclosure, the pivot axis 304 may be a substantially horizontal pivot axis, i.e. an axis substantially parallel to the floor. The substantially horizontal pivot axis 304 may be parallel to a longitudinal axis of the blade mold 100. In other examples, the pivot axis 304 may be inclined with respect to the horizontal plane. This may be due to tolerances in the system and/or to specific choices in the orientation of the equipment, e.g. of the blade mold 100 or the shear web positioning tool 250.

The system shown in Figures 3A-3I allows attachment of the shear webs 42 to the inside of the first blade shell part and does not require expensive cranes or other lifting equipment. The shear web positioning tool 250 facilitates handling of the shear webs 42, which may have been pre-assembled in the shear web positioning tool 250.

The hinge devices 300 may be such that the movable member 301 may be configured to be releasably connected to the shear web positioning tool 250. In this manner, a versatile system may be provided. In order to enable the releasable connection, the hinge devices 300 may comprise connection interfaces (not shown) configured to be releasably connected to corresponding connection interfaces (not shown) of the shear web positioning tool 250.

The connection interfaces may, in some examples, comprise one or more hooks in one of the hinge devices 300 or the shear web positioning tool 250 configured to engage with connection pins of the other of the hinge device 300 and the shear web positioning tool 250. Furthermore, the connection interfaces may, in some examples, comprise also a locking mechanism (not shown in the figure), e.g. a hydraulic pin in the movable member 301 of the hinge device 300 which may be arranged to engage a pad eye in the shear web positioning tool 250.

As also shown in the example of Figures 3A-3I, the static member 302 of the hinge devices 300 may be configured to be connected to the blade mold 100. In such a case, similar connection interfaces to those used for the releasable connection between the movable member 301 of the hinge devices 300 and the shear web positioning tool 250 may be provided.

The coupling of the static member 302 of the hinge devices 300 to the blade mold 100 may ensure a precise relative position between the parts and it may provide an anchor point for the hinge devices 300 themselves, which may improve the stability of the system and the accuracy of the method.

Although not visible in the schematic view of Figures 3A-3I, the shear web positioning tool 250 may comprise a tool first part being configured to hold a first portion of the shear webs 42 and being further configured to be connected to a first hinge device of the set of hinge devices 300. The shear web positioning tool 250 may comprise a tool second part being configured to hold a second portion of the shear webs 42 and being further configured to be connected to a second hinge device of the set of hinge devices 300. Shear webs 42 are generally slender and flexible parts that extend along the whole length of the blade 10, or e.g. 80 - 90% of the length of the blade. As wind turbine blades 10 become longer, handling of the shear webs 42 becomes increasingly difficult. In this sense, holding the shear webs 42 at multiple points distributed along their length may be preferred. To this end, one may use a shear web positioning tool 250 spanning the whole length of the shear webs 42. Nevertheless, in this example of the disclosure, the shear web positioning tool 250 may be split into at least two parts, and each of them may be positioned at different positions and, more specifically, at or near different ends of the shear web 42. This system may then result in a more flexible and less heavy shear web positioning tool 250 than if a single part tool is used.

Figure 3A depicts the system in a first configuration, i.e. with the shear web positioning tool 250 resting on a floor of the manufacturing plant and with the hinge devices 300 in a so-called "open configuration". The term "open configuration" is used herein to refer to the situation where the movable member 301 of the hinge devices 300 is in the position where coupling (and uncoupling) to the shear web positioning tool 250 generally takes place. This corresponds to a situation wherein the blade mold 100, the hinge devices 300 and the shear web positioning tool 250 are placed substantially side by side.

In order to ensure a proper positioning of the shear webs 42 upon attachment to the inside of the shell part contained in the blade mold 100, shear webs 42 may be pre-mounted with the adequate position in the shear web positioning tool 250. Such pre-mounting may be carried out either before or after coupling the shear web positioning tool 250 to the movable member 301 of the hinge devices 300. In order to facilitate such pre-mounting, the shear web positioning tool 250 may comprise support members 251 to support the shear webs 42 during the attaching process. As shown in Figure 3A, support members may be embodied as beams providing a framework or structure to support the shear webs 42. In some examples, pre-assembly may further include providing supports or attachments between one shear web and another.

Furthermore, the number and position of the support members 251 may be adjustable so as to adapt to different shear web configurations 42. The size and the number of shear webs 42 will depend on the design of the blade being manufactured. In the example shown in Figures 3A-3I, a system comprising two shear webs 42 is depicted. Nevertheless, examples of blades comprising one, three or any other suitable number of shear webs may also be provided. Also the distance between the shear webs 42 may vary for different blade designs. Accordingly, some examples may provide a versatile shear web positioning tool 250 in which the support members 251 may be easily dismountable and displaceable so as to adapt the precise positioning of the shear webs 42 to the design of the blade.

As also depicted in Figure 3A, the shear web positioning tool 250 may also comprise one or more fixation elements 252, 253 configured to secure the shear webs 42 to the support members 251 and/or to a base of the shear web positioning tool 250. More specifically, Figure 3A depicts a first group of fixation elements 252 arranged between the support members 251 and the shear webs 42 and a second group of fixation elements 253 arranged between the shear webs 42 and the base of the shear web positioning tool 250.

The fixation elements 252, 253 may be provided to prevent relative movement between the shear webs 42 or between the shear webs 42 and the movable member 301 of the hinge devices 300 during the attachment process. To this end, the fixation elements 252, 253 may provide fixation in all directions. In order to ensure a correct positioning of the shear webs 42 on the inside of the first blade shell part contained in the blade mold 100, it is not only preferred to provide and ensure a proper positioning of the shear webs 42 in the shear web positioning tool 250, but also to ensure no relative movement during the rotation maneuver.

After coupling of the shear web positioning tool 250 to the movable member 301 of the hinge devices 300, the movable member 301 of the hinge devices 300 is rotated about the pivot axis 304 so as to bring the shear web positioning tool 250 and the corresponding shear webs 42 in close proximity to the blade shell part. This second configuration of the system is depicted in Figure 3B, in which the hinge device 300 is shown in a so-called "closed configuration". A "closed configuration" in the present disclosure is to be understood as a configuration of the hinge devices 300 in which the movable member 301 has been already rotated with respect to the static member 302 and further in which the shear web positioning tool 250 is in position for the manufacturing operations to be carried out in the blade mold 100 area.

Different fixation elements may be used in examples of the disclosure. Thus, fixation elements may comprise mechanical clamps and/or vacuum holders. As a non-limiting example, Figure 3A depicts the use of mechanical clamps 253 for the fixation of the shear webs 42 to the base of the shear web positioning tool 250. More specifically, shear webs 42 comprising flanges may be used in this example and the clamps 253 may be fixed to the base of the shear web positioning tool 250, thus providing a mechanical fixation of the shear webs 42 by clamping the flanges. On the other hand, fixation elements 252 are shown as providing fixation between the support members 251 and the shear webs 42 at approximately half of the height of the shear webs 42. Fixation elements 252 may comprise mechanical elements featuring some interference contact with the shear webs 42, in which case physically corresponding features may be defined at both the fixation elements 252 and the shear webs 42. In other examples, vacuum holders may be used for the fixation elements 252, in which case no specific modification may be required on the shear webs 42.

In examples of the system, the system may be configured to enable a vertical adjustment of the position of the shear webs 42 after rotation about the pivot axis 304. Thus, after rotating the movable member 301 of the hinge devices 300 so as to bring the shear web positioning tool 250 in proximity of the first blade shell, the shear web positioning tool 250 may be lowered so as to put the shear webs 42 into contact with the surface of the blade shell. This example is illustrated by Figures 3B and 3C.

Figure 3B shows the configuration of the system after rotation of the movable member 301 of the hinge devices 300 about the pivot axis 304. As seen in Figure 3B, this rotation results in the shear webs 42 being positioned very close to the inner surface of the blade shell part. Nevertheless, a gap may still exist between the end of the shear webs 42 and the inner surface of the shell part. In order to close this gap, a vertically downwards movement may be carried out as depicted in Figure 3C. After such vertical displacement along direction D, the ends of the shear webs 42 may be brought into contact with the surface of the shell part.

Such a two-step approach may be preferred over the direct contact of the shear webs 42 with the shell part upon rotation of the movable member 301 of the hinge devices 300. More specifically, the provision of such vertical movement along direction D may be implemented to absorb minor errors during the positioning and turning operations. In this manner, the reliability of the process may be improved by providing an additional degree of freedom right before establishing the contact between the ends of the shear webs 42 and the surface of the blade shell part.

Apart from providing a better control of the maneuver, the vertical movement may also enable a better fixation or gluing of the shear webs 42. Thus, fixation of the shear webs 42 to the inner surface of the blade shell may comprise applying adhesive at the end of the shear webs 42 and/or on the surface of the first blade shell before putting an end of the shear webs 42 into contact with a surface of the first blade shell. In any case, a controllable vertical movement (i.e. a movement along line D) may be useful to facilitate a proper gluing process and, more specifically, to favor a good distribution of the glue over the contacting areas.

Different alternatives may be envisaged to implement such a vertical movement in different examples. In the example shown in Figure 3C, the movable member 301 of the hinge devices 300 may be configured to rotate with respect to the static member 302 about a substantially horizontal pivot axis 304, and the horizontal pivot axis 304 may be configured to be vertically displaceable. Thus, although not clearly visible in Figures 3B-3C, the horizontal pivot point 304 may move slightly downward in the D direction in order to transition from the state in Figure 3B to the state in Figure 3C.

In other examples, the shear web positioning tool 250 itself may be configured to vertically displace the shear webs 42 with respect to the static part of the hinge. In these examples, an actuator may be arranged in a position of the shear web positioning tool 250 to allow displacing the support members 251 supporting the shear webs 42.

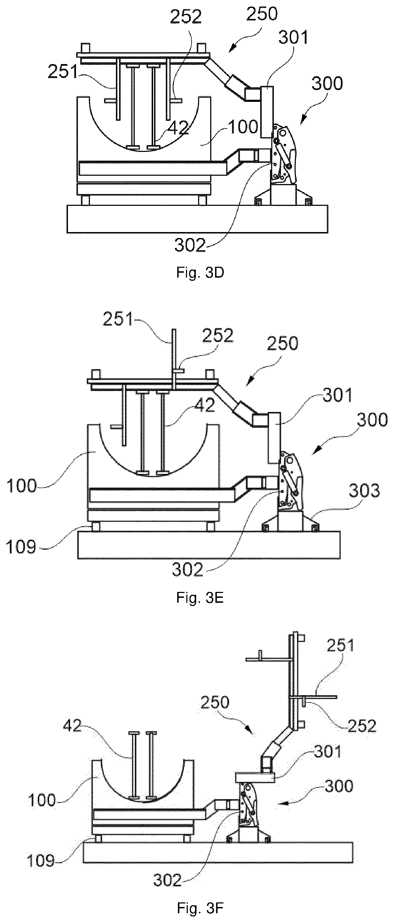

After placement and fixation of the shear webs 42, the fixation elements 252, 253 may be released. More specifically, in examples of the disclosure, fixation elements 252, 253 may be configured to be automatically engaged or disengaged to secure and/or release the shear webs 42. By providing an automatic functionality to the fixation elements, throughput and safety of the shear web attachment operation may be further improved. More specifically, as shown in Figure 3D, fixation elements 252 may be disengaged by automatically displacing them so as to release them from the shear webs 42. To this end, use of vacuum holders may be particularly convenient for the fixation elements 252 as one may easily engage or disengage the holders. On the other hand, clamps 253 fixing the flanges of the shear webs 42 to the base of the shear web positioning tool 250 may be removed manually.

After attachment of the shear webs 42 at their intended position of the shell part, and after disengagement of the fixation elements, the shear web positioning tool 250 may be moved back to its initial position. In order to carry out that operation without affecting the already installed shear webs 42, the support members 251 may be configured to move between two different operational positions and, more specifically, the one or more support members 251 may be configured to (automatically) move or be moved between two different operational positions.

The displacement of the support members 251 is schematically depicted in Figure 3E. Thus, after attachment and release of the fixation elements 252, 253, one of the support members 251 may be vertically displaced in an upwards direction. In this manner, the movable member 301 of the hinge device 300 can be rotated with respect to the pivot axis 304 and the shear web positioning tool 250 can be removed from the blade mold 100 area as shown in Figure 3F. Note that, in this example, such movement may be facilitated by the movement of the support member 251 to avoid a collision of the support member 251 with the already installed shear webs 42. Furthermore, the provision of an automatic mechanism to carry out the movement between the two operational positions may increase speed of the process while increasing safety of the maneuver for operators in the manufacturing plant.

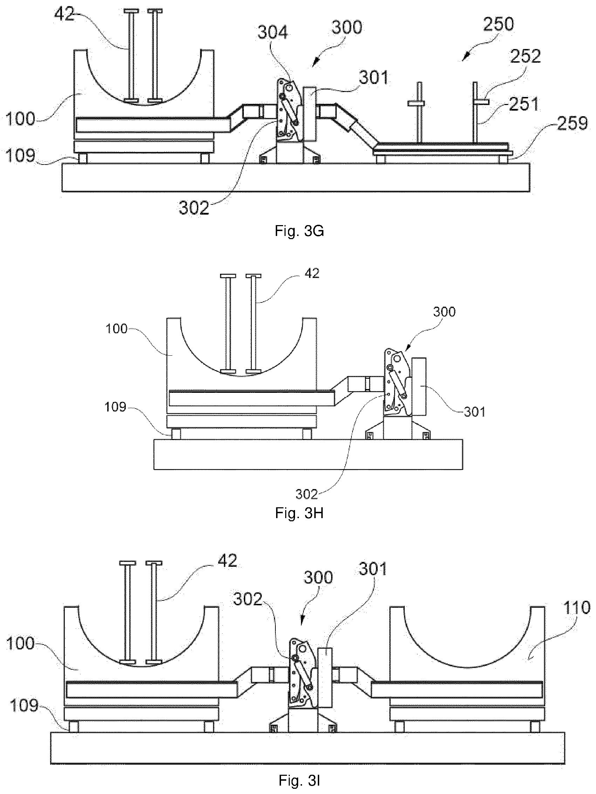

Figure 3G schematically depicts a situation after attachment of the shear webs 42 to the inside of the shell part contained in the blade mold 100, and after returning the shear web positioning tool 250 to its initial position, i.e. to the "open configuration". Different subsequent activities may be carried out depending on the design of the blade manufacturing line.

In one example, the blade mold 100 may be released from the static member 302 of the hinge device 300 and it may be moved out of the workstation. Subsequently, a new blade mold, containing a new blade shell part, may be located in that position and connected to the static member 302 of the hinge device 300. On the other side of the hinge device 300, a new shear web may be arranged on the shear web positioning tool 250. Subsequently, the same steps as those depicted in Figures 3A to 3G may be carried out to attach the shear webs to the blade shell part contained in the newly arranged blade mold.

In other examples of the disclosure, after attachment of the shear webs 42 to the first blade shell, a second blade mold 110, containing a second blade shell, may be provided. The second blade mold 110 may be connected to one or more hinge devices and the second blade mold 110 may be rotated so as to bring the second blade shell into contact with the first blade shell. In this manner, both attachment of the shear webs 42 and closing of the blade, i.e. gluing of the first blade shell and the second blade shell, may take place using the same hinge devices. In particular, both attachment of the shear webs 42 and closing of the blade may be carried out at the same workstation of the manufacturing line.

In examples of the disclosure, at least one the hinge devices used to rotate the second blade mold 110 may be the same as at least one of the hinge devices 300 used to rotate the shear web positioning tool 250. This example is depicted in Figures 3H and 3I. Thus, Figure 3H shows that the shear web positioning tool 250 is uncoupled from the movable member 301 of the hinge device 300 and removed from the workstation. Subsequently, a second blade mold 110 containing a second blade shell may be positioned in the workstation and it may be coupled to the movable member 301 of the hinge device 300.

A single hinge device 300 is depicted in Figures 3A - 3I. Nevertheless, as already indicated, a plurality of hinge devices may be provided, in which case not all of them may be necessarily used for both manufacturing steps. More specifically, the operation of closing the mold may require a larger number of hinge devices 300 than the attachment of the shear webs 42 or vice versa.

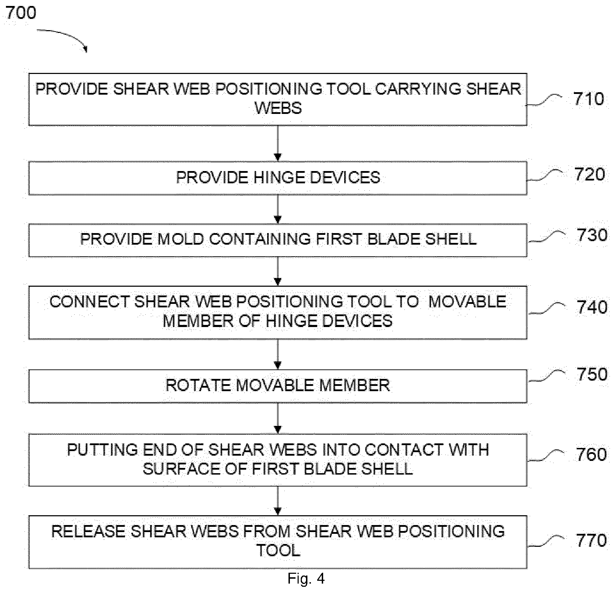

An example of a method 700 for attaching one or more shear webs 42 to a first wind turbine blade shell with a system like the one schematically depicted in Figures 3A - 3I is exemplified by the flowchart presented in Figure 4. Method 700 comprises, at block 710, providing the shear web positioning tool 250 carrying the shear webs 42. The method also comprises providing the one or more hinge devices in block 720 and providing the mold containing the first blade shell in block 730. Block 740 of the method 700 comprises connecting the shear web positioning tool 250 to the movable member 301 of the hinge devices 300. The method also comprises, at block 750, rotating the movable member 301 of the hinge devices 300 about a pivot axis 304 so as to bring the shear web positioning tool 250 in proximity of the blade shell. In examples, the pivot axis 304 may be a substantially horizontal pivot axis. Block 760 of method 700 comprises putting an end of the shear webs 42 into contact with a surface of the first blade shell. Finally, block 770 comprises releasing the shear webs 42 from the shear web positioning tool 250.

Although a number of blocks are provided in method 700, the method itself is not limited to the specific order or sequence indicated in Figure 4. Furthermore, additional blocks may be added to satisfy specific needs and/or to further improve the method. Thus, adhesive may be applied at the end of the shear webs 42 and/or on the surface of the first blade shell before carrying out block 760 so as to ensure a proper attachment of the shear webs 42. Similarly, a waiting time may be defined for block 770 so as to release the shear webs 42 only after curing of the adhesive.

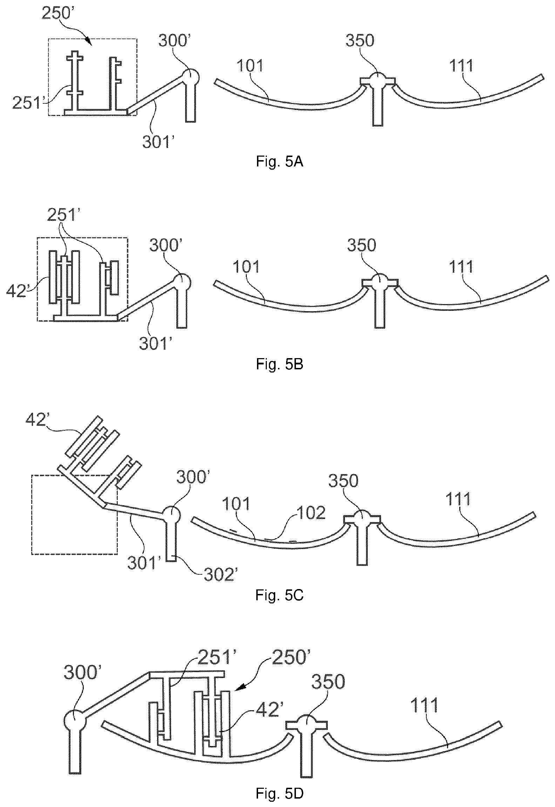

Figures 5A-5H schematically illustrate a further example of the present disclosure. In this example, two different sets of hinge devices (300' and 350) may be arranged in a workstation of the manufacturing plant. They may be employed in two different operations during wind turbine blade manufacturing. More specifically, a first set of hinge devices 300' may be used during attachment of the shear webs 42' to the inside of a first blade shell part 101. The second set of hinge devices 350 may be employed during closing of the wind turbine blade by gluing two blade shell parts. The blade shell parts 101 and 111 may be contained in respective first and second blade molds (not shown in Figures 5A-5H).

Figure 5A shows the initial arrangement of the system. A first set of hinge devices 300' is arranged between a first blade shell part 101 and a shear web positioning tool 250'. The shear web positioning tool 250' and the first set of hinge devices 300' may be equivalent to the shear web positioning tool 250 and to the set of hinge devices 300 already described with reference to Figures 3A-3I so no further details are deemed necessary. A second set of hinge devices 350 may be arranged between the first blade mold containing the first blade shell part 101 and a second blade mold containing a second blade shell part 111. The number, distribution and specifications of the hinge devices of the second set of hinge devices 350 may be different to those of the first set of hinge devices 300. More specifically, the number, distribution and specifications of the hinge devices may be adapted to the needs of the corresponding manufacturing operation.

In order to attach the shear webs 42 to the inside of the first blade shell part 101, the shear webs 42 may be pre-arranged in a shear web positioning tool 250'. The shear web positioning tool 250' may be connected to the movable member 301' of the hinge devices 300' as shown in Figure 5B. The positioning tool 250' in this example may comprise two posts or beams, and each of them may include components configured to carry a shear web. In one example, the shear webs may be suspended by a plurality of bolts.

As already explained with reference to figures 3A-3I, the movable member 301' of the first set of hinge devices 300' may be rotated with respect to the static member 302' so as to bring the shear webs 42' closer to the first blade shell part 101 as shown in Figure 5C and Figure 5D. Furthermore, adhesive 102 may be applied in specific locations on the surface of the first blade shell part 101. Alternatively or complementarily, adhesive may also be applied at the ends or mounting surfaces of the shear webs 42'.

Figure 5D schematically depicts the situation wherein the shear web positioning tool 250' has been completely rotated by the first set of hinge devices 300'. In this manner, the shear webs 42' are brought into contact with the first blade shell part 101 and, more specifically, with the locations of the first blade shell part 101 containing adhesive 102. In this example, the rotation of the movable member 301' of the first set of hinge devices 300' is enough to bring the shear webs 42' into contact with the first blade shell part 101. In other examples, a vertical movement may be carried out after rotating the movable member 301' of the hinge devices 300' in order to enable said contact between the shear webs 42' and the first blade shell part 101.

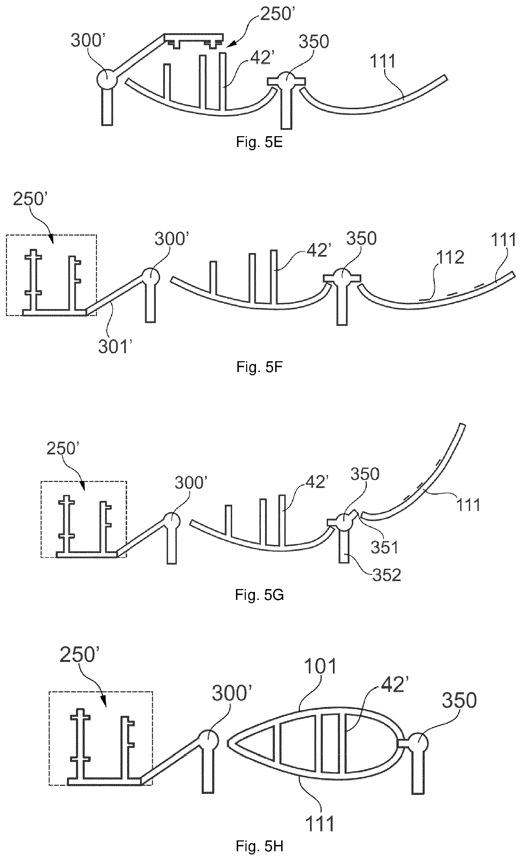

After fixation of the shear webs 42' on the inside of the first blade shell part 101, the support members 251' (and the fixation elements) may be disengaged in an equivalent manner as already explained with reference to Figures 3A-3I. Furthermore, support members 251' may be actuated to position them in a second operating condition. More specifically, in the example of figure 5E, this second operating condition corresponds to a retracted arrangement of the support members 251' or components of the support members such as the bolts in the aforementioned example. In this manner, the shear web positioning tool 250' may be moved without interfering with the already installed shear webs 42'.

Figure 5F illustrates the situation of the system after the movable member 301' of the first set of hinge devices 300' has been moved back to the initial condition. Thus, the shear webs 42' in this state are already attached to the inside of the first blade shell part 101. As also shown in figure 5F, adhesive 112 may be applied at specific locations of the second blade shell part 111. Alternatively or complementarily, adhesive may also be applied at the free ends of the shear webs 42'. As understood by those skilled in the art, apart from the adhesive shown in relation to the attachment of the shear webs 42', further adhesive may also be applied at the leading edge and trailing edge regions (and any other potential interface) of the first blade shell part 101 and/or the second blade shale part 111 in order to fasten the shell parts together.

The movable member 351 of the second set of hinge devices 350 may be coupled to a blade mold (not shown) containing the second blade shell part 111. In this manner, rotation of the movable member 351 with respect to the static member 352 may be carried out in order to move the second blade shell part 111. This manufacturing operation is depicted in Figure 5G. Finally, Figure 5H depicts the situation with the second blade shell part 111 already in contact with the first blade shell part 101. As also visible in Figure 5G, the shear webs 42' may be connected at their ends at both the first blade shell part 101 and the second blade shell part 111.

Although not depicted in Figures 5A-5H, the second set of hinge devices 350 may be used to bring the second blade mold back to its initial position after attachment or gluing of the two blade shell parts. Subsequently, a blade demolding operation may be carried out in order to release the blade from the first blade mold.

This written description uses examples to disclose the teaching, and also to enable any person skilled in the art to practice the teaching, including making and using any devices or systems and performing any incorporated methods. The patentable scope is defined by the claims. If reference signs related to drawings are placed in parentheses in a claim, they are solely for attempting to increase the intelligibility of the claim, and shall not be construed as limiting the scope of the claim.

## Claims

1. A system for attaching a shear web (42) to a first wind turbine blade shell, the first blade shell being held in a blade mold (100), the system comprising:
a shear web positioning tool (250) configured to hold one or more shear webs (42);
a set of hinge devices (300), each comprising a static member (302) and a movable member (301), wherein the movable member (301) is rotatable about a pivot axis (304) of the static member (302), and wherein
the shear web positioning tool (250) is configured to be connected to the movable members (301) of the hinge devices (300).

2. The system of claim 1 wherein the movable member (301) of the hinge devices (300) is configured to be releasably connected to the shear web positioning tool (250).

3. The system of any of claims 1 or 2 wherein the static member (302) of the hinge devices (300) is configured to be connected to the blade mold (100).

4. The system of any previous claim wherein the shear web positioning tool (250) comprises
a first part tool configured to hold a first portion of the shear webs (42) and configured to be connected to a first hinge device of the set of hinge devices (300); and
a second part tool configured to hold a second portion of the shear webs (42) and configured to be connected to a second hinge device of the set of hinge devices (300).

5. The system of any previous claim wherein the shear web positioning tool comprises (250) support members (251) configured to support the shear webs (42) during the attaching process, more specifically wherein the number and position of the support members (251) is adjustable so as to adapt to different shear webs (42).

6. The system of claim 5 wherein one or more of the support elements (251) are configured to move or be moved between two different operational positions and, more specifically, wherein one or more support elements (251) are configured to automatically move between two different operation positions.

7. The system of any of claims 5 or 6 wherein the shear web positioning tool (250) comprises one or more fixation elements (252, 253) configured to secure the shear webs (42) to the support members (251) and/or to a base of the web positioning tool (250) so as to prevent relative movements between the shear webs (42) or between the shear webs (42) and the movable member (301) of the hinge devices (300) during the attaching process, more specifically, wherein the fixation elements (252, 253) comprise mechanical clamps and/or vacuum holders.

8. The system of claim 7 wherein the fixation elements (252, 253) are configured to be automatically engaged or disengaged to secure and/or release the shear webs (42).

9. The system of any previous claim wherein the movable member (301) of the hinge devices (300) is configured to rotate with respect to the static member (302) about a substantially horizontal pivot axis (304), the pivot axis (304) being vertically displaceable.

10. The system of any previous claim wherein the shear web positioning tool (250) is configured to vertically displace the shear webs (42) with respect to the static member 302 of the hinge.

11. A method for attaching one or more shear webs (42) on a first wind turbine blade shell with a system according to any of claims 1 to 10, the method comprising:
providing the shear web positioning tool (250) carrying the shear webs (42);
providing the one or more hinge devices (300);
providing the blade mold (100) containing the first blade shell;
connecting the shear web positioning tool (250) to the movable member (301) of the hinge devices (300);
rotating the movable member (301) of the hinge devices (300) about a pivot axis (304) so as to bring the shear web positioning tool (250) in proximity of the first blade shell;
putting an end of the shear webs (42) into contact with a surface of the first blade shell;
releasing the shear webs (42) from the shear web positioning tool (250).

12. The method of claim 11, the method further comprising:
applying adhesive at the end of the shear webs (42) and/or on the surface of the first blade shell before putting an end of the shear webs (42) into contact with a surface of the first blade shell.

13. The method of any of claims 11 or 12, the method further comprising:
after rotating the movable member (301) of the hinge devices (300) so as to bring the shear web positioning tool (250) in proximity of the first blade shell, lowering the shear web positioning tool (250) so as to put the shear webs (42) into contact with the surface of the blade shell.

14. The method according to any of claims 11 to 13, the method further comprising:
after attachment of the shear webs (42) on the first blade shell, providing a second blade mold (110) containing a second blade shell;
connecting one or more hinge devices to the second blade mold (110);
rotating the second blade mold (110) so as to bring the second blade shell into contact with the first blade shell.

15. The method of claim 14 wherein at least one of the hinge devices used to rotate the second mold (110) is the same as at least one of the hinge devices (300) used to rotate the shear web positioning tool (250).

## Patentansprüche

1. Ein System zum Befestigen eines Schubstegs (42) an einer ersten Windturbinenblattschale, wobei das erste Blatt in einer Blattform (100) gehalten wird, wobei das System umfasst:
ein Werkzeug (250) zum Positionieren des Schubstegs (42), das so ausgelegt ist, dass es einen oder mehrere Schubstege (42) hält;
einen Satz von Scharniervorrichtungen (300), die jeweils ein feststehendes Element (302) und ein bewegliches Element (301) umfassen, wobei das bewegliche Element (301) um eine Schwenkachse (304) des feststehenden Elements (302) drehbar ist, und wobei
das Werkzeug (250) zum Positionieren des Schubstegs so ausgebildet ist, dass es mit den beweglichen Elementen (301) der Scharniervorrichtungen (300) verbunden werden kann.

2. System nach Anspruch 1, wobei das bewegliche Element (301) der Scharniervorrichtungen (300) so ausgebildet ist, dass es lösbar mit dem Werkzeug (250) zum Positionieren des Schubstegs verbunden werden kann.

3. System nach einem der Ansprüche 1 oder 2, wobei das feststehende Element (302) der Scharniervorrichtungen (300) so ausgebildet ist, dass es mit der Blattform (100) verbunden werden kann

4. System nach einem der vorstehenden Ansprüche, wobei das Werkzeug (250) zum Positionieren des Schubstegs ein erstes Teilwerkzeug umfasst, das so ausgelegt ist, dass es einen ersten Abschnitt des Schubstegs (42) hält, und das so ausgelegt ist, dass es mit einer ersten Scharniervorrichtung des Satzes von Scharniervorrichtungen (300) verbunden werden kann
und ein zweites Teilwerkzeug umfasst, das so ausgelegt ist, dass es einen zweiten Abschnitt des Schubstegs (42) hält, und das so ausgelegt ist, dass es mit einer zweiten Scharniervorrichtung des Satzes von Scharniervorrichtungen (300) verbunden werden kann.

5. System nach einem der vorstehenden Ansprüche, wobei das Werkzeug zum Positionieren des Schubstegs (250) Stützelemente (251) umfasst, die so ausgelegt sind, dass sie den Schubsteg (42) während des Befestigungsvorgangs stützen, insbesondere, wobei die Anzahl und die Position der Stützelemente (251) einstellbar sind, um sich an unterschiedliche Schubstege (42) anzupassen.

6. System nach Anspruch 5, wobei eines oder mehrere der Stützelemente (251) so ausgelegt sind, dass sie sich zwischen zwei verschiedenen Betriebspositionen bewegen oder bewegt werden können, und insbesondere wobei eines oder mehrere Stützelemente (251) so ausgelegt sind, dass sie sich automatisch zwischen zwei verschiedenen Betriebspositionen bewegen.

7. System nach einem der Ansprüche 5 oder 6, wobei das Werkzeug (250) zum Positioneren des Schubstegs ein oder mehrere Befestigungselemente (252, 253) umfasst, die so ausgelegt sind, dass sie die Schubstege (42) an den Stützelementen (251) und/oder an einer Basis des Werkzeugs (250) zum Positionieren des Schubstegs befestigen, um Relativbewegungen zwischen den Schubsteg (42) oder zwischen den Schubsteg (42) und dem beweglichen Elements (301) der Scharniervorrichtungen (300) während des Befestigungsvorgangs zu verhindern, insbesondere, wobei die Befestigungselemente (252, 253) mechanische Klemmen und/oder Vakuumhalter umfassen.

8. System nach Anspruch 7, wobei die Befestigungselemente (252, 253) so ausgelegt sind, dass sie automatisch in Eingriff gebracht oder gelöst werden können, um die Schubstege (42) zu sichern und/oder freizugeben

9. System nach einem der vorstehenden Ansprüche, wobei das bewegliche Element (301) der Scharniervorrichtungen (300) so ausgebildet ist, dass es sich relativ zum feststehenden Element (302) um eine im Wesentlichen horizontale Schwenkachse (304) drehen kann, wobei die Schwenkachse (304) vertikal verschiebbar ist.

10. Das System nach einem der vorstehenden Ansprüche, wobei das Werkzeug (250) zum Positionieren des Schubstegs so ausgelegt ist, dass es die Schubstege (42) relativ zum feststehenden Element (302) des Scharniers vertikal verschiebt.

11. Verfahren zum Anbringen eines oder mehrerer Schubstege (42) an einer ersten Windturbinenblattschale mit einem System gemäß einem der Ansprüche 1 bis 10, wobei das Verfahren umfasst:
Bereitstellen des die Schubstege (42) tragenden Werkzeugs zum Positionieren des Schubstegs (250);
Bereitstellen der einen oder mehreren Scharniervorrichtungen (300);
Bereitstellen der die erste Rotorblattschale enthaltenden Rotorblattform (100);
Verbinden des Werkzeugs (250) zum Positionieren des Schubstegs mit dem beweglichen Element (301) der Scharniervorrichtungen (300);
Drehen des beweglichen Elements (301) der Scharniervorrichtungen (300) um eine Schwenkachse (304), um das Werkzeug (250) zum Posiotineren des Schubstegs in die Nähe der ersten Blattschale zu bringen;
Inkontaktbringen eines Endes des Schubstegs (42) mit einer Oberfläche der ersten Blattschale;
Lösen des Schubstegs (42) aus dem Werkzeug (250) zum Positionieren des Schubstegs.

12. Verfahren nach Anspruch 1, wobei das Verfahren ferner umfasst: das Auftragen von Klebstoff auf das Ende des Schubstegs (42) und/oder auf die Oberfläche der ersten Blattschale, bevor ein Ende des Schubstegs (42) mit einer Oberfläche der ersten Blattschale in Kontakt gebracht wird.

13. Verfahren nach einem der Ansprüche 1 1 oder 12, wobei das Verfahren ferner umfasst:
nach dem Drehen des beweglichen Elements (301) der Scharniervorrichtungen (300), um das Werkzeug zum Positionieren des Schubstegs (250) in die Nähe der ersten Blattschale zu bringen, das Absenken des Werkzeugs zum Positionieren des Schubstegs (250), um den Schubsteg (42) mit der Oberfläche der Blattschale in Kontakt zu bringen.

14. Verfahren nach einem der Ansprüche 1 bis 13, wobei das Verfahren ferner umfasst:
nach dem Anbringen des Schubstegs (42) an der ersten Blattschale, das Bereitstellen einer zweiten Blattform (110), die eine zweite Blattschale enthält;
das Verbinden einer oder mehrerer Scharniervorrichtungen mit der zweiten Blattform (110);
das Drehen der zweiten Blattform (110), sodass die zweite Blattschale mit der ersten Blattschale in Kontakt gebracht wird.

15. Verfahren nach Anspruch 14, wobei mindestens eine der zum Drehen der zweiten Form (110) verwendeten Scharniervorrichtungen mit mindestens einer der zum Drehen des Werkzeugs zum Positionieren des Schubstegs (250) verwendeten Scharniervorrichtungen (300) identisch ist.

## Revendications

1. Système permettant de fixer une âme de cisaillement (42) à une première demi-coque de pale d'éolienne, la première pale étant maintenue dans un moule de pale (100), le système comprenant :
un outil de positionnement de l'âme de cisaillement (250) configuré pour maintenir une ou plusieurs âmes de cisaillement (42):
un ensemble de dispositifs d'articulation (300), chacun comprenant un élément statique (302) et un élément mobile (301), dans lequel l'élément mobile (301) peut tourner autour d'un axe de pivotement (304) de l'élément statique (302), et dans lequel
l'outil de positionnement de l'âme de cisaillement (250) est conçu pour être relié aux éléments mobiles (301) des dispositifs d'articulation (300).

2. Système selon la revendication 1, dans lequel l'élément mobile (301) des dispositifs d'articulation (300) est configuré pour être relié de manière amovible à l'outil de positionnement de l'âme de cisaillement (250).

3. Système selon l'une quelconque des revendications 1 ou 2, dans lequel l'élément fixe (302) des dispositifs d'articulation (300) est configuré pour être relié au moule de pale (100)

4. Système selon l'une quelconque des revendications précédentes, dans lequel l'outil de positionnement de l'âme de cisaillement (250) comprend un premier outil partiel configuré pour maintenir une première partie des âmes de cisaillement (42) et configuré pour être relié à un premier dispositif d'articulation de l'ensemble de dispositifs d'articulation (300) ; et un deuxième outil partiel configuré pour maintenir une deuxième partie des âmes de cisaillement (42) et configuré pour être relié à un deuxième dispositif d'articulation de l'ensemble de dispositifs d'articulation (300).

5. Système selon l'une quelconque des revendications précédentes, dans lequel l'outil de positionnement de l'âme de cisaillement (250) comprend des éléments de support (251) configurés pour supporter les âmes de cisaillement (42) pendant le processus de fixation, plus précisément dans lequel le nombre et la position des éléments de support (251) sont réglables de manière à s'adapter à différentes âmes de cisaillement (42).

6. Système selon la revendication 5, dans lequel un ou plusieurs des éléments de support (251) sont configurés pour se déplacer ou être déplacés entre deux positions de fonctionnement différentes et, plus précisément, dans lequel un ou plusieurs éléments de support (251) sont configurés pour se déplacer automatiquement entre deux positions de fonctionnement différentes.

7. Système selon l'une quelconque des revendications 5 ou 6, dans lequel l'outil de positionnement de l'âme de cisaillement (250) comprend un ou plusieurs éléments de fixation (252, 253) configurés pour fixer les âmes de cisaillement (42) aux éléments de support (251) et/ou à une base de l'outil de positionnement de l'âme (250) de manière à empêcher tout mouvement relatif entre les âmes de cisaillement (42) ou entre les âmes de cisaillement (42) et l'élément mobile (301) des dispositifs d'articulation (300) pendant le processus de fixation, plus précisément, dans lequel les éléments de fixation (252, 253) comprennent des pinces mécaniques et/ou des ventouses.

8. Système selon la revendication 7, dans lequel les éléments de fixation (252, 253) sont configurés pour être automatiquement engagés ou désengagés afin de fixer et/ou de libérer les âmes de cisaillement (42).

9. Système selon l'une quelconque des revendications précédentes, dans lequel l'élément mobile (301) des dispositifs d'articulation (300) est configuré pour tourner par rapport à l'élément fixe (302) autour d'un axe de pivotement (304) sensiblement horizontal, l'axe de pivotement (304) étant déplaçable verticalement.

10. Système selon l'une quelconque des revendications précédentes, dans lequel l'outil de positionnement de l'âme de cisaillement (250) est configuré pour déplacer verticalement les âmes de cisaillement (42) par rapport à l'élément fixe (302) de la charnière.

11. Procédé de fixation d'une ou plusieurs âmes de cisaillement (42) sur une première demi-coque de pale d'éolienne à l'aide d'un système selon l'une quelconque des revendications 1 à 10, le procédé comprenant :
fournir l'outil de positionnement de l'âme de cisaillement (250) portant les âmes de cisaillement (42) ;
fournir un ou plusieurs dispositifs d'articulation (300) ;
fournir le moule de pale (100) contenant la première demi-coque de pale ;
relier l'outil de positionnement de l'âme de cisaillement (250) à l'élément mobile (301) des dispositifs de charnière (300) ;
faire tourner l'élément mobile (301) des dispositifs d'articulation (300) autour d'un axe de pivotement (304) de manière à amener l'outil de positionnement de l'âme de cisaillement (250) à proximité de la première demi-coque de pale ;
mettre une extrémité des âmes de cisaillement (42) en contact avec une surface de la première demi-coque de pale ;
libérer les nervures de cisaillement (42) de l'outil de positionnement des nervures de cisaillement (250).

12. Procédé selon la revendication 11 le procédé comprenant en outre : l'application d'adhésif à l'extrémité des âmes de cisaillement (42) et/ou sur la surface de la première demi-coque de pale avant de mettre une extrémité des âmes de cisaillement (42) en contact avec une surface de la première demi-coque de pale.

13. Procédé selon l'une quelconque des revendications 11 ou 12, le procédé comprenant en outre :
après avoir fait pivoter l'élément mobile (301) des dispositifs d'articulation (300) de manière à amener l'outil de positionnement d'âme de cisaillement (250) à proximité de la première demi-coque de pale, abaisser l'outil de positionnement d'âme de cisaillement (250) de manière à mettre les âmes de cisaillement (42) en contact avec la surface de la demi-coque de pale.

14. Procédé selon l'une quelconque des revendications 11 à 13, le procédé comprenant en outre :
après la fixation des âmes de cisaillement (42) sur la première demi-coque de pale, fournir un second moule de pale (110) contenant une seconde demi-coque de pale ;
raccorder un ou plusieurs dispositifs d'articulation au second moule de pale (110) ;
faire pivoter le second moule de pale (110) de manière à amener la seconde demi-coque de pale en contact avec la première demi-coque de pale.

15. Procédé selon la revendication 14, dans lequel au moins l'un des dispositifs d'articulation utilisés pour faire pivoter le second moule (110) est identique à au moins l'un des dispositifs d'articulation (300) utilisés pour faire pivoter l'outil de positionnement d'âme de cisaillement (250).
